# FASCICULE DE BREVET EUROPEEN

(11) **EP 0 842 520 B1**
(45) Date de publication et mention de la délivrance du brevet: **15.05.2002**
(21) Numéro de dépôt: 96927096.6
(22) Date de dépôt: 26.07.1996
(51) Int. Cl.: H01G 4/18, H01G 4/20

(54) **CONDENSATEUR A DIELECTRIQUE EN POLYPROPYLENE ET FILM METALLISE POUR LA REALISATION D'UN TEL CONDENSATEUR**
KONDENSATOR MIT DIELEKTRIKUM AUS POLYPROPYLEN UND METALLISIERTER FILM FÜR SOLCHEN KONDENSATOR
CAPACITOR HAVING A POLYPROPYLENE DIELECTRIC, AND METALLISED FILM FOR MAKING SAME

(30) Priorité: 28.07.1995 FR 9509244
(43) Date de publication de la demande: 20.05.1998
(73) Titulaire: BOLLORE TECHNOLOGIES, F-29000 Quimper (FR)
(72) Inventeur: TAMIC, Lucien, F-29500 Ergue-Gaberic (FR)
(74) Mandataire: Le Forestier, Eric
(86) Numéro de dépôt international: FR9601189
(87) Numéro de publication internationale: WO9705634

(56) Documents cités:
- EP-A- 0 497 160
- FR-A- 2 671 659

## Description

La présente invention concerne les condensateurs à diélectriques en polypropylène qui présente un point Vicat supérieur à 150°C. Elle concerne également des films métallisés pour la réalisation de tels condensateurs.

De nombreux films en polypropylène sont déjà utilisés comme films diélectriques de condensateurs. Des polypropylènes utilisés comme diélectriques de condensateurs sont par exemple ceux commercialisés sous les références JD6900 et JD6100 de la société SHELL, qui présentent des températures Vicat de l'ordre de 150°C.

La présente invention a pour but de proposer un nouveau film en polypropylène pour condensateurs qui présente une meilleure tenue en température que les films connus dans l'art antérieur, qui permette d'améliorer la fiabilité des condensateurs et d'étendre la gamme de leur tenue en température.

Ces buts sont atteints selon la présente invention par un condensateur dont le diélectrique est en polypropylène et présente un module d'élasticité en flexion supérieur à 1500 MPa et une température de fléchissement sous charge supérieure à 110°C.

Ce module d'élasticité en flexion, cette température de fléchissement et ce point Vicat sont respectivement mesurés selon les normes ASTM D 790, ASTM D 648 (charge de 455 MPa - variation de température de 2°C/min) et ASTM D 1525 - méthode A (charge d'1 Kg - variation de température de 50°C/heure).

L'invention concerne également des films métallisés pour la réalisation de condensateurs de ce type ayant les caractéristiques définies dans la revendication 8.

D'autres caractéristiques et avantages de l'invention ressortiront encore de la description qui suit. Cette description est purement illustrative et non limitative. Elle doit être lue en regard des dessins annexés sur lesquels :
- la figure 1 représente schématiquement en perspective un film de condensateur conforme à l'invention ;
- la figure 2 est un graphe comparatif sur lequel on a porté des courbes de modules d'élasticité en fonction de la température pour un film en polypropylène conforme à l'invention et un film de condensateur conforme à un art antérieur connu ;
- la figure 3 est un graphe comparatif sur lequel on a porté des courbes de pourcentages de retraits en fonction de la température pour ces deux films.

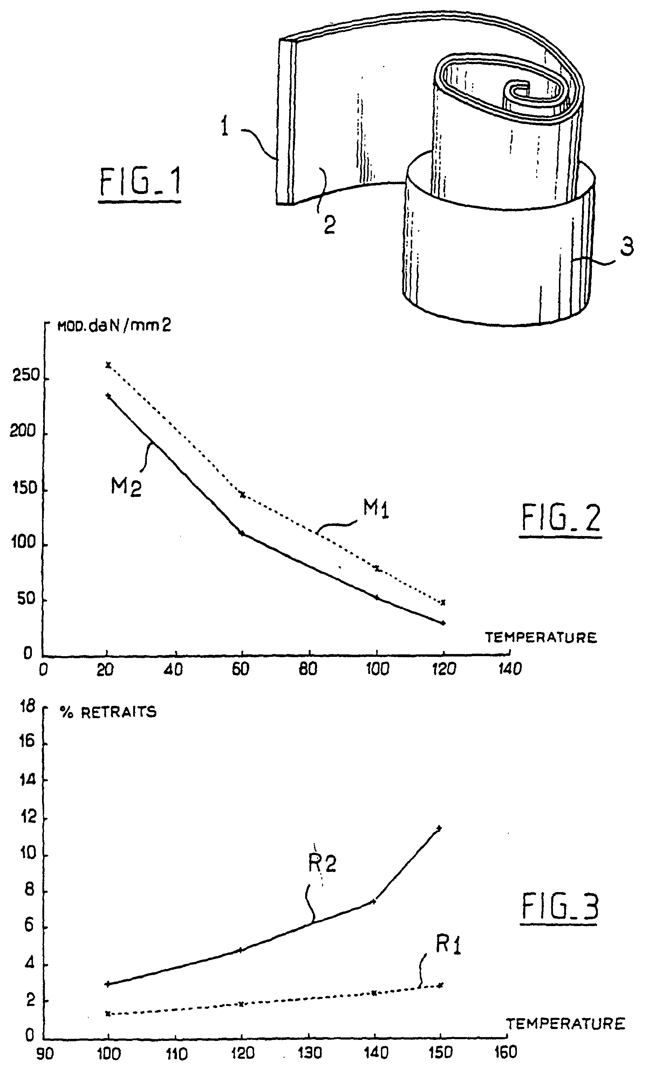

Les condensateurs conformes à l'invention peuvent être des condensateurs dont le film de polypropylène et les électrodes sont séparés, ou encore être constitués, ainsi qu'on l'a illustré sur la figure 1, par des films de polypropylène métallisés.

Le condensateur de la figure 1 comporte un substrat diélectrique 1 constitué par un film de polypropylène sur lequel sont déposées, selon des techniques connues en soi par l'Homme du Métier, une ou plusieurs couches 2 d'un métal, tel que l'aluminium et/ou le zinc ou un alliage de ceux-ci.

Le film métallisé ainsi réalisé est enroulé sur lui même, ainsi que représenté sur la figure 1. L'enroulement obtenu peut être revêtu d'une protection 3 en une résine thermodurcissable, une cire d'enrobage ou un liquide diélectrique.

Par exemple, le substrat 1 est un film de polypropylène de 6 µm, métallisé avec une couche 2 de zinc pur, qui présente une résistance de surface comprise entre 5 et 10 Ω par surface carrée.

La protection 3 est constituée en une résine thermodurcissable de polyuréthanne.

Selon l'invention, le polypropylène du substrat diélectrique 1 est choisi pour ses caractéristiques suivantes :
- il présente un module d'élasticité en flexion déterminé selon la norme ASTM D 790 supérieur à 1500 MPa,
- sa température de fléchissement sous charge déterminée selon la norme ASTM D 648 est supérieure à 110°C,
- sa température de ramollissement Vicat déterminée selon la méthode A de la norme D 1525 est supérieure à 150°C.

Il présente en outre une grande qualité diélectrique.

Un tel polypropylène est par exemple celui commercialisé par la société HIMONT sous la dénomination commerciale Adstif T 2101 F.

Les propriétés thermomécaniques du film qui vient d'être décrit sont illustrées sur les figures 2 et 3 par les courbes M1 et R1 (courbes en pointillés sur lesquelles les points relevés sont marqués par des signes *).

Sur ces figures, les courbes M2 et R2 (courbes en traits pleins sur lesquelles les points relevés sont marqués par des signes +) correspondent aux courbes de modules et de retraits en fonction de la température du polypropylène commercialisé par la société SHELL sous la dénomination JD6900.

Comme on l'aura compris à la lecture de ces figures, le film métallisé conforme à l'invention présente un module d'élasticité nettement supérieur à celui des films de l'art antérieur. Ce module (mesuré selon la norme ASTM D 882) est de l'ordre de 80 daN/mm2 (800 MPa) à 100°C et de 50 daN/mm2 (500 MPa) à 120°C, alors que pour les films classiques il est respectivement à ces températures de 52 et 30 daN/mm2 (520 et 300 MPa).

Egalement, le film selon l'invention présente une thermorétraction beaucoup plus faible que les films classiquement utilisés dans l'art antérieur. Pour le film selon l'invention, le pourcentage de thermorétraction dans le sens machine est de l'ordre de 1,9 % à 120°C et de 2,5 % à 140°C. Pour les films de l'art antérieur, le pourcentage de thermorétraction est respectivement de l'ordre de 5 % et 7,8 % à ces deux températures.

On notera que du fait de cette meilleure stabilité dimensionnelle, les films proposés par l'invention sont moins sensibles au claquage électrique d'origine thermomécanique ; en effet, en cas d'échauffement localisé sous l'effet d'un courant de conduction au travers du film, les fluages subis par les films selon l'invention sont moins importants que pour les films de l'art antérieur. Or, les phénomènes de fluage sont favorables à la rupture diélectrique notamment dans les comportements à long terme.

Par ailleurs, on notera également que les films de polypropylène métallisés conformes à l'invention sont aptes supporter des résistances de surface supérieures pour les couches métallisées (résistances supérieures à 10 Ω par surface carrée), ce qui permet d'améliorer substantiellement la tension de claquage en courant alternatif du condensateur.

Ce résultat est important car pour les condensateurs au film métallisé, l'augmentation de la résistance des couches métallisées entraîne une augmentation des pertes diélectriques du condensateur ; cette augmentation induit un échauffement du diélectrique, qui devient rapidement inacceptable dans le cas des films de polypropylène selon l'art antérieur.

Le film de polypropylène d'un condensateur selon l'invention, plus stable en température, accepte une légère augmentation des pertes diélectriques du condensateur - et l'échauffement qui en résulte. On peut donc déposer sur ce film une couche de métal plus fine (Ω/□ plus élevé) et obtenir ainsi pour le condensateur des tensions de claquage plus élevées en régime alternatif. Par conséquent, les films en polypropylène proposés pour les condensateurs de l'invention permettent de bénéficier pleinement en terme de fiabilité d'une légère augmentation de la résistance de surface de la couche métallisée.

Par ailleurs, comme on l'aura compris, le film en polypropylène que l'invention propose d'utiliser pour ses condensateurs est apte à supporter un traitement thermique à une température supérieure à celle que peut supporter un film classique de condensateur.

Ceci permet de réaliser des fusions partielles de polypropylène (par chauffage à 140°) et d'améliorer l'adhérence entre les spires de l'enroulement. On réduit par conséquent les échanges gazeux avec l'atmosphère extérieure de sorte que l'on a ainsi réalisé une auto-protection avec le film proposé par l'invention. En outre, l'enroulement obtenu est d'une plus grande compacité.

On peut également réaliser une protection de l'enroulement au moyen d'une couche de surface constituée d'un autre polymère (copolymère propylène éthylène, polybutylène par exemple) thermofusible. Une telle protection n'était pas envisageable avec les films diélectriques utilisés pour les condensateurs de l'art antérieur. Par contre, le dépôt d'une telle couche de polymère thermofusible de protection est envisageable avec les films en polypropylène proposés par l'invention, qui présentent une tenue en température suffisante pour le traitement thermique nécessaire pour la thermofusion de la couche de surface.

Egalement, le polypropylène est avantageusement un polypropylène traité par des agents nucléants, ce qui permet d'augmenter la température de fléchissement.

On donne dans les tableaux ci-après des résultats d'essais de vieillissement accéléré (tableau 1) et résistance au claquage (tableau 2) obtenus d'une part avec un condensateur dont le film diélectrique est en un polypropylène classiquement utilisé dans l'art antérieur et d'autre part avec un condensateur du type de celui décrit en référence à la figure 1.

**Tableau 1 -**

| Essai de vieillissement accéléré (pallier de 24 heures à chaque tension et chaque température d'essai) | | | | | |
|---|---|---|---|---|---|
| | Film sique | clas- | Film l'inven | selon tion | |
| V/µm | 100°C | 120°C | 100°C | 120 | % de claquage |
| 75 | 0 | 0 | 0 | 0 | |
| 90 | 0 | 0 | 0 | 0 | |
| 105 | 10 | 20 | 0 | 5 | |
| 115 | 20 | 100 | 0 | 40 | |
| 125 | 100 | / | 33 | 100 | |

D'autres essais ont encore été réalisés avec des films métallisés conformes à l'invention présentant une résistance comprise entre 10 et 15Ω par surface carrée. On constate pour ces films une légère diminution du nombre de claquages.

**Tableau 2.**

| Essais sur la stabilité de la capacité ΔC/C des condensateurs (épaisseur du film : 8 µm - métallisation à l'aluminium - condensateur protégé avec de la cire). | | | |
|---|---|---|---|
| | Traitement thermique | Film classique R = 3 Ω par suface carrée | Film selon l'invention R = 3 Ω par suface carrée |
| ΔC/C % | 115°C | - 2,56 | -2,79 |
| | 140°C | Claquage | -1,04 |

Comme on l'aura compris, le film de polypropylène proposé comme diélectrique pour les condensateurs selon l'invention présente les avantages suivants :
- augmentation de la température maximale d'utilisation de 20°C ou plus,
- amélioration de la fiabilité du condensateur aux températures habituelles d'utilisation,
- possibilité de simplifier la protection des condensateurs dans le cas des condensateurs au film métallisé.

## Revendications

1. Condensateur dont le diélectrique (1) est en un polypropylène qui présente un point Vicat supérieur à 150°C, **caractérisé en ce que** ce polypropylène présente un module d'élasticité en flexion supérieur à 1500 Mpa et une température de fléchissement sous charge supérieure à 110°.

2. Condensateur selon la revendication 1, **caractérisé en ce qu'**il est constitué par un film diélectrique métallisé enroulé sur lui-même.

3. Condensateur selon la revendication 2, **caractérisé en ce que** la couche métallisée (2) présente une résistance supérieure à 10 Ω par surface carrée.

4. Condensateur selon l'une des revendications 2 et 3, **caractérisé en ce que** les spires de l'enroulement sont adhérées par fusion partielle.

5. Condensateur selon l'une des revendications 2 à 4, **caractérisé en ce que** l'enroulement présente une couche de protection constituée en un polymère thermofusible.

6. Condensateur selon la revendication 5, **caractérisé en ce que** ce polymère thermofusible est un copolymère propylèneléthylène ou un polybutylène.

7. Condensateur selon l'une des revendications précédentes, **caractérisé en ce que** le polypropylène (1) est un polypropylène traité par des agents nucléants.

8. Film en polypropylène métallisé pour condensateur, comportant un diélectrique (1) en polypropylène qui présente un point Vicat supérieur à 150°C, **caractérisé en ce que** le polypropylène présente un module d'élasticité en flexion supérieur à 1500 Mpa et une température de fléchissement sous charge supérieure à 110°C.

9. Film selon la revendication 8, **caractérisé en ce que** la couche métallisée (2) présente une résistance supérieure à 10 Ω par surface carrée.

10. Film selon la revendication 9, **caractérisé en ce que** la résistance de la couche métallisée (2) est inférieure à 15 Ω par surface carrée.

11. Film selon l'une des revendications 8 à 10, **caractérisé en ce qu'**il présente une couche de protection constituée en un polymère thermofusible.

12. Film selon la revendication 11, **caractérisé en ce que** le polymère thermofusible est un copolymère propylène/éthylène ou un polybutylène.

13. Film selon l'une des revendications 8 à 12, **caractérisé en ce que** le polypropylène du substrat est un polypropylène contenant par des agents nucléants.

## Patentansprüche

1. Kondensator, dessen Dielektrikum (1) aus einem Polypropylen ist, welches einen Vicat-Punkt größer als 150°C aufweist, **dadurch gekennzeichnet, daß** das Polypropylen einen Biege-Elastizitätsmodul größer als 1500 MPa und eine Biegetemperatur unter Belastung größer als 110°C aufweist.

2. Kondensator nach Anspruch 1, **dadurch gekennzeichnet, daß** er eine metallisierte dielektrische Folie, die um sich selbst gewickelt ist, aufweist.

3. Kondensator nach Anspruch 2, **dadurch gekennzeichnet, daß** die Metallisierungsschicht (2) einen Widerstand größer als 10 Ω pro Fläche im Quadrat aufweist.

4. Kondensator nach einem der Ansprüche 2 und 3, **dadurch gekennzeichnet, daß** die Windungen der Wicklung durch teilweise Verschweißung verbunden sind.

5. Kondensator nach einem der Ansprüche 2 bis 4, **dadurch gekennzeichnet, daß** die Wicklung eine Schutzschicht aufweist, welche aus einem wärmeschmelzbaren Polymer gebildet ist.

6. Kondensator nach Anspruch 5, **dadurch gekennzeichnet, daß** das wärmeschmelzbare Polymer ein Propylen-Ethylen-Copolymer oder ein Polybutylen ist.

7. Kondensator nach einem der vorhergehenden Ansprüche, **dadurch gekennzeichnet, daß** das Polypropylen (1) ein mit Nucleierungsmitteln behandeltes Polypropylen ist.

8. Folie aus metallisiertem Polypropylen für Kondensatoren, umfassend ein Dielektrikum (1) aus Polypropylen, welches einen Vicat-Punkt größer als 150°C aufweist, **dadurch gekennzeichnet, daß** das Polypropylen einen Biege-Elastizitätsmodul größer als 1500 Mpa und eine Biegetemperatur unter Belastung größer als 110°C aufweist.

9. Folie nach Anspruch 8, **dadurch gekennzeichnet, daß** die Metallisierungsschicht (2) einen Widerstand größer als 10 Ω pro Fläche im Quadrat aufweist.

10. Folie nach Anspruch 9, **dadurch gekennzeichnet, daß** die Metallisierungsschicht (2) einen Widerstand kleiner als 15 Ω pro Fläche im Quadrat aufweist.

11. Folie nach einem der Ansprüche 8 bis 10, **dadurch gekennzeichnet, daß** sie eine Schutzschicht aufweist, welche aus einem wärmeschmelzbaren Polymer gebildet ist.

12. Folie nach Anspruch 11, **dadurch gekennzeichnet, daß** das wärmeschmelzbare Polymer ein Propylen-Ethylen-Copolymer oder ein Polybutylen ist.

13. Folie nach einem der Ansprüche 8 bis 12, **dadurch gekennzeichnet, daß** das Polypropylen des Substrats ein Polypropylen ist, welches Nucleierungsmittel enthält.

## Claims

1. A capacitor whose dielectric (1) is made of a polyprppylene which has a Vicat point higher than 150°C, said capacitor being **characterized in that** the polypropylene has a modulus of elasticity in bending higher than 1500 MPa, and a sag point under load higher than 110°C.

2. A capacitor according to claim 1, **characterized in that** it is constituted by a rolled-up metallized dielectric film.

3. A capacitor according to claim 2, **characterized in that** the layer of metallization (2) has surface resistance higher than 10 Ω per square.

4. A capacitor according to claim 2 or 3, **characterized in that** the turns of the roll adhere to one another by being partially melted.

5. A capacitor according to any one of claims 2 to 4, **characterized in that** the roll has a protective layer made of a heat-sealable polymer.

6. A capacitor according to claim 5, **characterized in that** the heat-sealable polymer is a propylene and ethylene copolymer or a polybutylene.

7. A capacitor according to any preceding claim, **characterized in that** the polypropylene (1) is a polypropylene that is treated with nucleating agents.

8. A metallized polypropylene film for a capacitor, including a dielectric (1) made of a polypropylene which has a Vicat point higher than 150°C, said film being **characterized in that** the polypropylene has a modulus of elasticity in bending higher than 1500 MPa, and a sag point under load higher than 110°C.

9. A film according to claim 8, **characterized in that** the layer of metallization (2) has surface resistance higher than 10 Ω per square.

10. A film according to claim 9, **characterized in that** the surface resistance of the layer of metallization (2) is less than 15 Ω per square.

11. A film according to any one of claims 8 to 10, **characterized in that** it has a protective layer made of a heat-sealable polymer.

12. A film according to claim 11, **characterized in that** the heat-sealable polymer is a propylene and ethylene copolymer or a polybutylene.

13. A film according to any one of claims 8 to 12, **characterized in that** the polypropylene of the substrate is a polypropylene containing nucleating agents.
